# EUROPEAN PATENT SPECIFICATION

(11) **EP 4 070 518 B1**
(45) Date of publication and mention of the grant of the patent: **04.02.2026**
(21) Application number: 19821304.3
(22) Date of filing: 03.12.2019
(51) Int. Cl.: H04L 12/00

(54) **FIRST NETWORK NODE, SECOND WIRELESS DEVICE AND METHODS PERFORMED THEREIN**
ERSTER NETZWERKKNOTEN, ZWEITE DRAHTLOSE VORRICHTUNG UND DARIN AUSGEFÜHRTE VERFAHREN
PREMIER NOEUD DE RÉSEAU, SECOND DISPOSITIF SANS FIL ET PROCÉDÉS MIS EN OEUVRE DANS CEUX-CI

(43) Date of publication of application: 12.10.2022
(73) Proprietor: TELEFONAKTIEBOLAGET LM ERICSSON (PUBL), 164 83 Stockholm (SE)
(72) Inventor: DAHLQVIST, Mattias, 117 56 Stockholm (SE); HEGARTY, Charles, 168 53 BROMMA (SE); BURMAN, Bo, 194 47 UPPLANDS VÄSBY (SE)
(74) Representative: Ericsson
(86) International application number: PCT/SE2019/051227
(87) International publication number: WO 2021/112727

(56) References cited:
- WO-A1-2013/041261
- WO-A2-2009/083825

## Description

### TECHNICAL FIELD

Embodiments herein relate to a first network node, a second wireless device and methods performed therein. Furthermore, a computer program product and a computer-readable storage medium are also provided herein. In particular, embodiments herein relate to handling a communication session.

### BACKGROUND

In a typical wireless communication network, user equipment (UE), also known as wireless communication devices, mobile stations, stations (STA) and/or wireless devices, communicate via a Radio Access Network (RAN) to one or more core networks belonging to different network operators. The RAN covers a geographical area which is divided into areas or cell areas, with each area or cell area being served by a radio network node, e.g., a Wi-Fi access point or a Radio Base Station (RBS), which in some networks may also be called, for example, a NodeB, eNodeB or a gNodeB. The area or cell area is a geographical area where radio coverage is provided by the radio network node. The radio network node communicates over an air interface operating on radio frequencies with the UE within range of the radio network node.

A Universal Mobile Telecommunications System (UMTS) is a third generation telecommunication network, which evolved from the second generation (2G) Global System for Mobile Communications (GSM). The UMTS Terrestrial Radio Access Network (UTRAN) is essentially a RAN using Wideband Code Division Multiple Access (WCDMA) and/or High Speed Packet Access (HSPA) for user equipment. In a forum known as the Third Generation Partnership Project (3GPP), telecommunications suppliers propose and agree upon standards for third generation networks and UTRAN specifically, and investigate enhanced data rate and radio capacity. In some RANs, e.g. as in UMTS, several radio network nodes may be connected, e.g., by landlines or microwave, to a controller node, such as a Radio Network Controller (RNC) or a Base Station Controller (BSC), which supervises and coordinates various activities of the plural radio network nodes connected thereto. The RNCs are typically connected to one or more core networks.

Specifications for the Evolved Packet System (EPS) have been completed within the 3GPP and this work continues in the coming 3GPP releases. The EPS comprises the Evolved Universal Terrestrial Radio Access Network (E-UTRAN), also known as the Long Term Evolution (LTE) radio access network, and the Evolved Packet Core (EPC), also known as System Architecture Evolution (SAE) core network. E-UTRAN/LTE is a variant of a 3GPP radio access technology wherein the radio network nodes are directly connected to the EPC core network rather than to RNCs. In general, in E-UTRAN/LTE the functions of an RNC are distributed between the radio network nodes, e.g. eNodeBs in LTE, and the core network. As such, the RAN of an EPS has an essentially "flat" architecture comprising radio network nodes connected directly to one or more core networks, i.e. they are not connected to RNCs.

With the emerging 5G technologies such as New Radio (NR), the use of very many transmit- and receive-antenna elements is of great interest as it makes it possible to utilize beamforming, such as transmit-side and receive-side beamforming. Transmit-side beamforming means that the transmitter can amplify the transmitted signals in a selected direction or directions, while suppressing the transmitted signals in other directions. Similarly, on the receive-side, a receiver can amplify signals from a selected direction or directions, while suppressing unwanted signals from other directions.

Today there is a tight coupling between services a customer of a user equipment (UE) can use and the operator serving the UE. In the web domain, usage of offered services is more flexible, i.e. the services are not tied to specific suppliers. Prior-art solutions are based on a strict service level agreement (SLA) between the operator and the customer. This means that the customer may only be able to use services that are part of a subscription of the customer. It also means that if one party of a communication has a richer set of services, it will not make any difference to the communication between two parties as long as the other party has a more limited set of services. The service execution possibility is based on a least common denominator principle, which means that if a user A has a video communication service as part of the subscription, but a user B has not, video communication will not work between the users, even if it is supported by user B's communication network. WO2009083825 shows where services are shared by a group of users and are made available for use by the users of the group. WO2013041261 shows a system to provide inter-operator value added and supplementary services to a subscriber belonging to varied and independent network operators.

### SUMMARY

An object of embodiments herein is to provide a mechanism that handles communication in a more efficient manner. The invention is defined by the independent claims.

According to an aspect the object is achieved by providing a method performed by a first network node for handling a communication session. The first network node is associated with a first communication network operated by a first operator. The first network node sets up a data channel between the first network node and a second wireless device. The second wireless device is associated with a second communication network operated by a second operator. The first network node provides data over the setup data channel to the second wireless device, wherein the data is related to a service provided for a first wireless device serviced by the first operator.

According to another aspect the object is achieved by providing a method performed by a second wireless device for handling a communication session. The second wireless device is associated with a second communication network operated by a second operator. The second wireless device sets up a data channel, initiated by a first network node, between the first network node and the second wireless device. The first network node is associated with a first communication network operated by a first operator. The second wireless device obtains data over the setup data channel, wherein the data is related to a service provided for a first wireless device serviced by the first operator.

According to yet another aspect of embodiments herein, the object is achieved by providing a first network node for handling a communication session, wherein the first network node is associated with a first communication network operated by a first operator. The first network node is configured to setup a data channel between the first network node and a second wireless device, wherein the second wireless device is associated with a second communication network operated by a second operator. The first network node is further configured to provide data over the setup data channel to the second wireless device, wherein the data is related to a service provided for a first wireless device serviced by the first operator.

According to still another aspect of embodiments herein, the object is achieved by providing a second wireless device for handling a communication session, wherein the second wireless device is associated with a second communication network operated by a second operator. The second wireless device is configured to setup a data channel, initiated by a first network node, between the first network node and the second wireless device, wherein the first network node is associated with a first communication network operated by a first operator. The second wireless device is further configured to obtain data, over the setup data channel, wherein the data is related to a service provided for a first wireless device serviced by the first operator.

It is furthermore provided herein a computer program product comprising instructions, which, when executed on at least one processor, cause the at least one processor to carry out the method above, as performed by the first network node or the second wireless device, respectively. It is additionally provided herein a computer-readable storage medium, having stored thereon a computer program product comprising instructions which, when executed on at least one processor, cause the at least one processor to carry out the method according to the method above, as performed by the first network node or the second wireless device, respectively.

By enabling delegation of data related to a service provided for the first wireless device serviced by the first operator to the second wireless device serviced by the second operator, the first and second wireless device in a communication session do not have to subscribe to the same service from their respective operators to get a full-service experience. Instead of being forced to least common denominator in terms of available services, it is provided an aggregated set of services, which may be initiated by any wireless device of the communication session, e.g. phone call, irrespective if they are the primary owner of the service or not. This may be provided when the wireless devices and respective operators support Internet protocol Multimedia Subsystem (IMS) data channel logic, and the provided services are possible to share with non and thereby the communication is handled in a more efficient manner.

### BRIEF DESCRIPTION OF THE DRAWINGS

Examples of embodiments herein are described in more detail with reference to attached drawings in which:
- Fig. 1: is a schematic block diagram illustrating embodiments of a communications network.
- Fig. 2: is a combined signalling scheme and flowchart depicting embodiments herein.
- Fig. 3: is a combined signalling scheme and flowchart depicting embodiments herein.
- Fig. 4: is a flowchart depicting embodiments of a method performed by a first network node.
- Fig. 5: is a flowchart depicting embodiments of a method performed by a second wireless device.
- Fig. 6A: is a schematic block diagram illustrating an example of additional services available to a second wireless device.
- Fig. 6B: is a schematic block diagram illustrating an example of informative content being pushed by a first operator to a second wireless device.
- Fig. 6C: is a schematic block diagram illustrating an example of a view of a first wireless device's services.
- Fig. 7: is a flowchart illustrating some embodiments herein.
- Fig. 8A: is a flowchart illustrating some embodiments herein.
- Fig. 8B: is a flowchart illustrating some embodiments herein.
- Fig. 9: is a schematic block diagram illustrating a first network node according to embodiments herein.
- Fig. 10: is a schematic block diagram illustrating a second wireless device according to embodiments herein.

### DETAILED DESCRIPTION

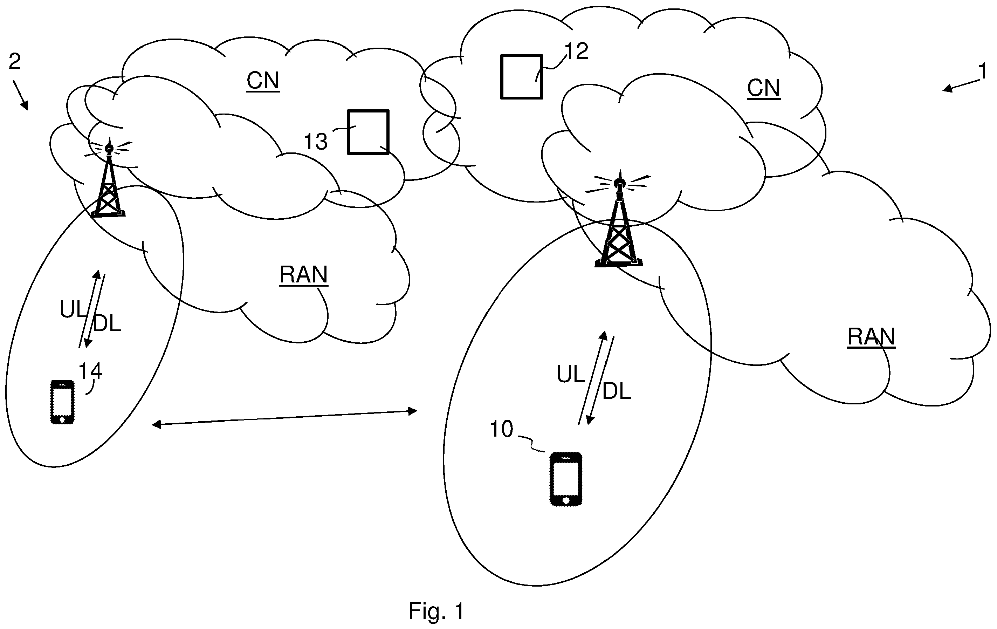

Embodiments herein relate to wireless communications networks in general. **Fig. 1** is a schematic overview depicting a wireless communications network, such as **a first communications network 1** and **a second communication network 2.** The first wireless communications network 1 and the second wireless communications network 2 comprise one or more Radio Access Networks (RANs) and one or more Core Networks (CNs). The first communications network 1 and the second communications network 2 may use one or a number of different technologies. Embodiments herein relate to recent technology trends that are of particular interest in a New Radio (NR) context, however, embodiments are also applicable in further development of existing wireless communications systems such as e.g. LTE or Wideband Code Division Multiple Access (WCDMA).

In the wireless communications network 1, **a first wireless device 10** is comprised and in the wireless communications network 2 **a second wireless device 14** is comprised. The first wireless device 10 and the second wireless device 14, may e.g. be a User Equipment (UE) such as a mobile station, a non-access point (non-AP) station (STA), a STA and/or a wireless terminal, communicating via e.g. one or more Access Networks (ANs), e.g. RANs, to one or more CNs. It should be understood by the skilled in the art that "UE" is a non-limiting term which means any terminal, wireless communications terminal, user equipment, Narrowband Internet of Things (NB-IoT) device, Machine Type Communication (MTC) device, Device to Device (D2D) terminal, or node e.g. smart phone, laptop, mobile phone, sensor, relay, mobile tablets or even a small base station capable of communicating using radio communication with a radio network node within an area served by the radio network node.

The wireless devices communicate through RANs and CN and the wireless communication networks comprise radio network nodes such as e.g. a base station providing radio coverage over a geographical area, a first service area, of a first radio access technology (RAT), such as NR, LTE, or similar. Each radio network node may be a transmission and reception point such as an access node, an access controller, a base station, e.g. a radio base station such as a gNodeB (gNB), an evolved Node B (eNB, eNode B), a NodeB, a base transceiver station, a radio remote unit, an Access Point Base Station, a base station router, a Wireless Local Area Network (WLAN) access point or an Access Point Station (AP STA), a transmission arrangement of a radio base station, a stand-alone access point or any other network unit or node capable of communicating with a wireless device within the area served by the radio network node depending e.g. on the first radio access technology and terminology used. The radio network node may be referred to as a serving radio network node wherein the service area may be referred to as a serving cell, and the serving network node communicates with the wireless device in form of DL transmissions to the wireless device and UL transmissions from the wireless device. It should be noted that a service area may be denoted as cell, beam, beam group or similar to define an area of radio coverage.

The first communications network 1 comprises **a first network node 12** such as core network node, an IMS node, a service node, an operator node or similar. The first network node 12 is associated with the first communication network 1 operated by a first operator. The second communications network 2 comprises **a second network node 13** such as core network node, an IMS node, a service node, an operator node or similar. The second network node 13 is associated with the second communication network 2 operated by a second operator.

With the evolution of technology from circuit switched to packet switched and the uptake of Over-the-top (OTT) applications in the UEs, consumers are getting used to a large freedom in choice of services. With IP transformation in mind for basic telephony, in combination with the powerful UEs, e.g. smart phones, there is now a possibility to introduce some of the flexibility the web domain allows also for operator-controlled services. It is for example possible to allow wireless devices to share a subset of their additional communication services with remote parties.

According to embodiments herein the first network node 12 sets up a data channel between the first network node 12 and the second wireless device 14, wherein the second wireless device 14 is associated with the second communication network 2 operated by the second operator. The first network node 12 then provides data over the setup data channel, wherein the data is related to a service provided for the first wireless device 10 serviced by the first operator. Thus, the second wireless device 14 may receive information about what services user of the first wireless device 10 has subscribed to, and the second wireless device may be enabled to execute services that the first wireless device 10 has subscribed to but the second wireless device 14 has not subscribed to.

Examples of services that may be shared from the first wireless device 10 to the second wireless device 14 may be one or more of the following:
- Group services for e.g. a small business or other situations where group services make sense, and where the members of the group potentially belong to different operators.
- An additional operator service not subscribed to by the second wireless device 14, but where the second wireless device 14 may make use of operator assets that are not an integral part of its home operator network.

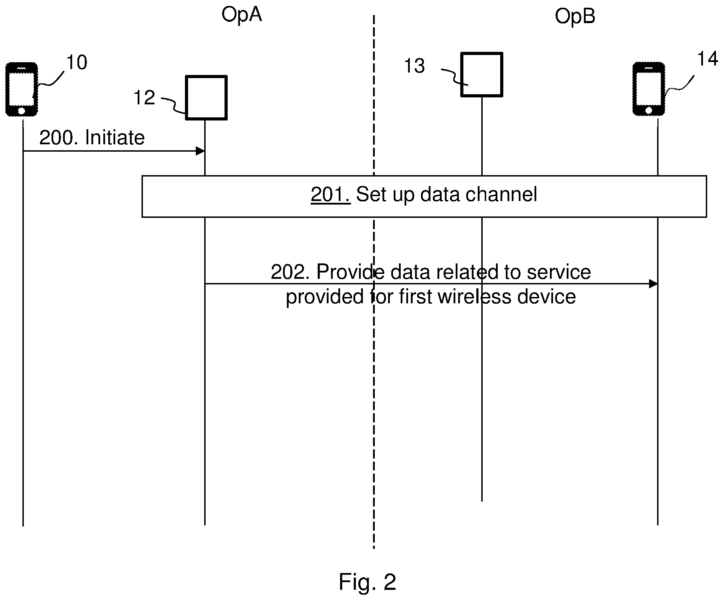

**Fig. 2** is a combined signalling scheme and flowchart depicting embodiments herein. As stated above the first network node 12 is associated with the first communication network 1 operated by the first operator and the second wireless device 14 is associated with the second communication network 2 operated by the second operator.

**Action 200.** The first wireless device 10 wants to start a communication session with the second wireless device 14 or vice versa. Thus the communication is initiated by any party e.g. sending a session initiation protocol request or similar. This may be e.g. a voice call or a video communication. The second wireless device 14 may not subscribe, e.g. have access, to the same service as provided for the first wireless device 10.

**Action 201.** The first network node 12 being part of the communication sets up the data channel to the second wireless device 14. Thus, for enabling the second wireless device 14 to obtain data related to the service provided for the first wireless device 10, the first network node 12 therefore first sets up the data channel between the first network node 12 and the second wireless device 14. The data channel may e.g. be setup between the first network node 12 and the second wireless device 14, via the second network node 13. The data channel may be an Internet protocol Multimedia Subsystem (IMS) data channel.

**Action 202.** The first network node 12 then provides the data over the setup data channel, wherein the data is related to the service provided for the first wireless device 10 serviced by the first operator. The second wireless device 14 may thereby share the data related to the service from the first wireless device 10 even though the data related to the service is provided for the first wireless device 10 associated with the first communication network 1 operated by the first operator.

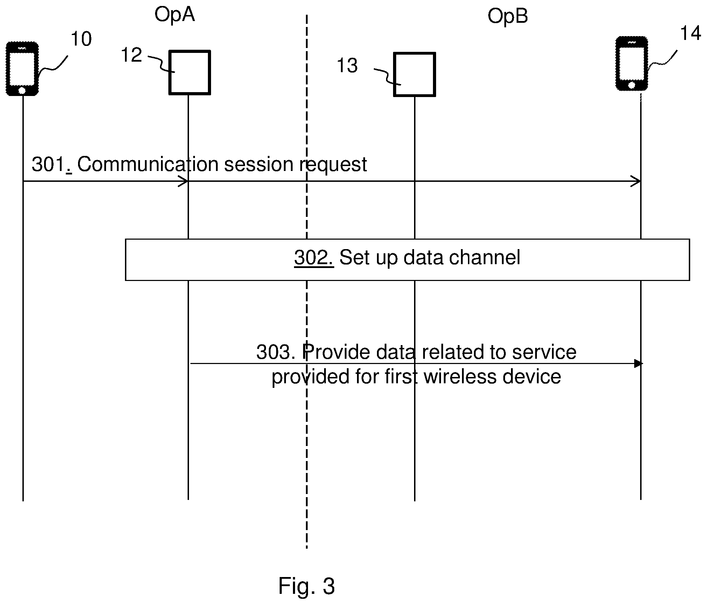

**Fig. 3** is a combined signalling scheme and flowchart depicting some embodiments herein.

**Action 301.** When the first wireless device 10 wants to start a communication session with the second wireless device 14, the first wireless device 10 may send a communication session request towards the second wireless device 14, via the first network node 12. According to some embodiments, the first network node 12 receives the communication session request, towards the second wireless device 14, from the first wireless device 10 associated with the first communication network 1 operated by the first operator. The communication session request may comprise a Session Description Protocol (SDP), indicating data as media. The SDP is a descriptor indicating media type, e.g. a format for describing streaming media communications parameters and is used for describing multimedia communication sessions for the purposes of session announcement, session invitation, and parameter negotiation. The SDP does not deliver any media by itself but is used between endpoints for negotiation of media type, format, and/or associated properties. The communication session request may further comprise a capability indicator. The capability indicator enables specific call routing and increases probability that the data channel-enabled call ends up in a data channel-capable device, in case the terminating wireless device, e.g. second wireless device 14, has several wireless devices associated with the same number. The capability indicator may comprise data regarding capability of the first wireless device 10 such as general support of a IMS data channel logic. The communication session request may further comprise an application identifier for identifying an application (i.e. the service) of the second wireless device 14 to be associated with the established IMS data channel. The application identifier enables the first network node 12 and the second wireless device 14 to understand what services are supported.

**Action 302.** The first network node 12 then sets up the data channel between the first network node 12 and the second wireless device 14. This may be based on the received information from the different wireless devices during communication setup. The setup of the data channel, i.e. the establishment and characteristics for the data channel, may be negotiated according an offer/answer model, using SDP, which may include a media-type m-line to specify use of a WebRTC data channel, connection points c-line, and attribute a-lines to outline any detailed characteristics. This action corresponds to action 201. The first network node 12 may e.g. determine that the first wireless device 10 and the second wireless device 14, may be Voice over IMS capable, and/or support IMS data channel logic to allow the set-up of the data channel. The data channel may be setup between the first network node 12 and the second wireless device 14, e.g. via the second network node 13.

**Action 303.** The first network node 12 then provides, to the second wireless device 14, data related to the service provided for the first wireless device 10 serviced by the first operator over the setup data channel. Thereby sharing the service, subscribed to by the first wireless device 10, to the second wireless device 14 during the communication session. This action corresponds to action 202.

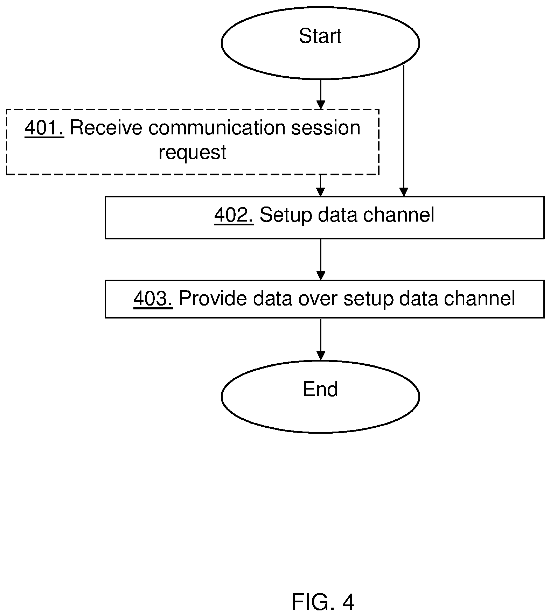

The method actions performed by the first network node 12 for handling the communication session according to embodiments herein will now be described with reference to a flowchart depicted in Fig. 4. The first network node 12 is associated with the first communication network 1 operated by the first operator. The actions do not have to be taken in the order stated below, but may be taken in any suitable order. Actions performed in some embodiments are marked with dashed boxes.

**Action 401.** The first network node 12 may receive the communication session request, towards the second wireless device 14, from the first wireless device 10 associated with the first communication network 1 operated by the first operator. The communication session request may comprise the SDP, indicating data as media. The communication session request may comprise the application identifier. The communication session request may comprise the capability indicator.

**Action 402.** The first network node 12 sets up the data channel between the first network node 12 and the second wireless device 14, wherein the second wireless device 14 is associated with the second communication network 2 operated by the second operator. The data channel may be setup between the first network node 12 and the second wireless device 14, via the second network node 13. The data channel may be an IMS data channel, e.g. established as an additional media extension to an MMTel voice call establishment.

**Action 403.** The first network node 12 provides data over the setup data channel to the second wireless device 14, wherein the data is related to the service provided for the first wireless device 10 serviced by the first operator. The data may be provided by pushing data from the first network node 12 to the second wireless device 14. The data may be provided by the second wireless device 14 pulling data from the first network node 12. The data related to the service may be provided by executing the service at the second wireless device 14 wherein the service is for the first wireless device 10 serviced by the first operator.

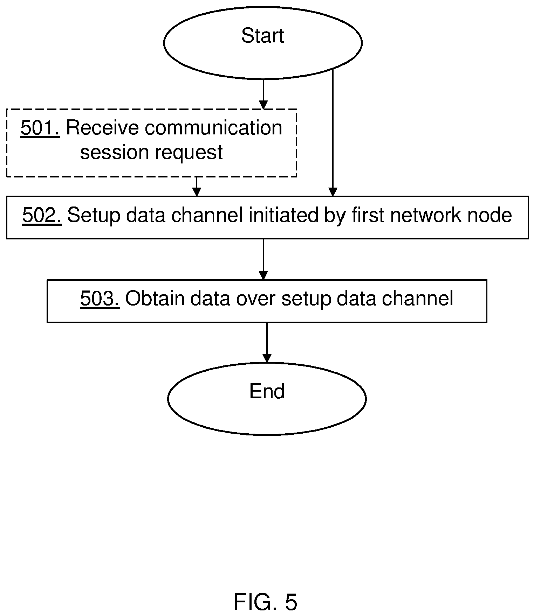

The method actions performed by the second wireless device 14 for handling the communication session according to embodiments herein will now be described with reference to a flowchart depicted in Fig. 5. The second wireless device 14 is associated with the second communication network 2 operated by the second operator.

**Action 501.** The second wireless device 14 may receive a communication request that may comprise the SDP, indicating data as media during set up. The communication session request may comprise the capability indicator and/or the application identifier. The communication session request may comprise the capability indicator, to inform the second wireless device 14 that the first network node 12 and the first wireless device 14 support the data channel logic. The SDP appended to the communication session request may comprise the application identifier, to indicate which application of the second wireless device 14 to be associated with the data channel.

**Action 502.** The second wireless device 14 sets up the data channel, initiated by the first network node 12, between the first network node 12 and the second wireless device 14. As mentioned above the data channel may be setup between the first network node 12 and the second wireless device 14, directly or via the second network node 13. The first network node 12 is associated with the first communication network 1 operated by the first operator.

**Action 503.** The second wireless device 14 obtains data, over the setup data channel, wherein the data is related to the service provided for the first wireless device 10 serviced by the first operator. Obtaining the data related to the service may comprise executing the service at the second wireless device 14 wherein the service is for the first wireless device 10 serviced by the first operator.

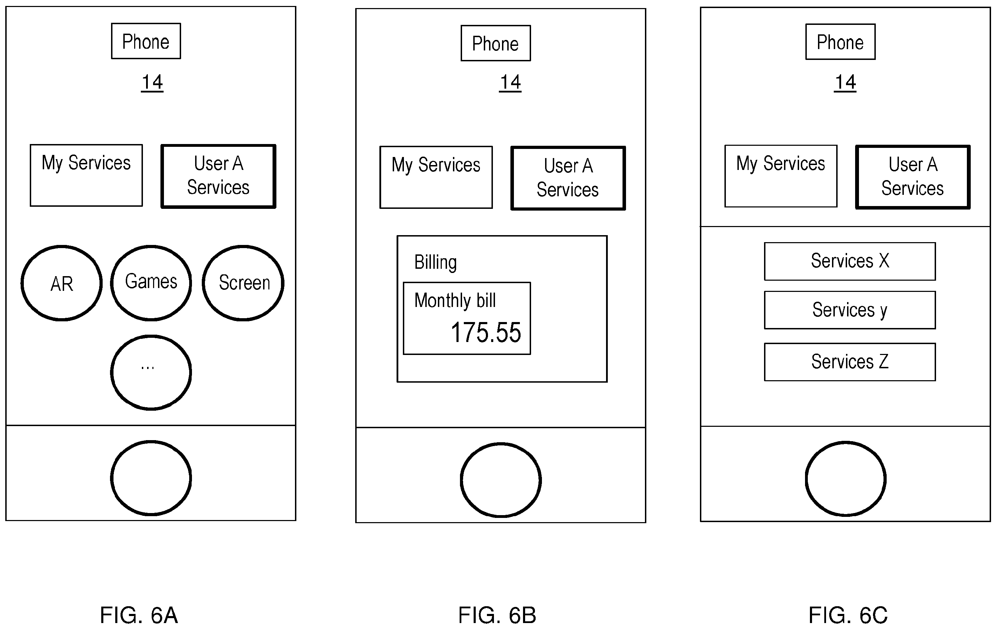

When the first wireless device 10 performs an originating IMS call towards any destination, the IMS data channel may be established between the first wireless device 10 and the home operator network, e.g. the first network node 12 of the first operator. This data channel may automatically be established without further action from the calling first wireless device 10. The first network node may push content, e.g. page layout and java-scripts, to the first wireless device 10, which automatically runs the scripts and exposes the result on the screen of first wireless device 10. The result may e.g. be a visual view of the additional services enabled by the first operator for the first wireless device 10. It may also be informative content being shown with information from the first operator to the first wireless device 10. Fig. 6A illustrates an example of additional services available to the second wireless device 12 when the data channel has been setup between the first wireless device 10 and the second wireless device 14. The services of the first wireless device 10 (user A) are displayed (when button of User A services is pushed) such as augmented reality, games, screen **Fig. 6B** shows an example of informative content being pushed by the first network node 12 to the second wireless device 14. The service may e.g. be billing information or similar. **Fig. 6C** shows an example of a view of the first wireless device's 10 services which may be shared with the second wireless device 14 during the communication session, e.g. services x-z such as a call control in a group context.

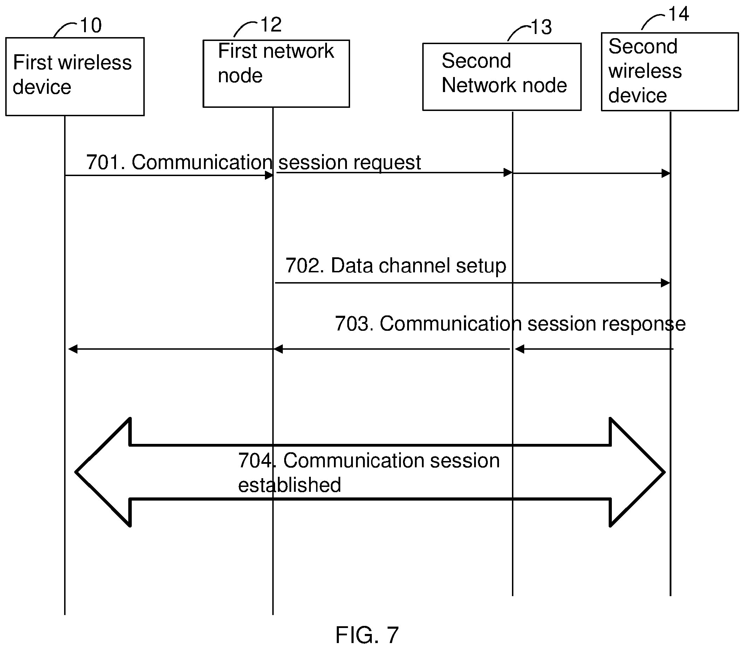

**Fig. 7** illustrates a flowchart according to embodiments herein showing the following steps:
**Action 701.** The first operator, which is hosting the first wireless device 10, has a network entity, e.g. Application Server (AS) which supports the IMS data channel and provides additional operator services to the wireless devices over the IMS data channel. When the first wireless device 10 transmits the communication session request to, e.g. calls, the second wireless device 14, the IMS signaling may traverse the first network node 12, e.g. AS, hosting the IMS data channel functionality and services. The AS works as a back-to-back user agent (B2BUA) and may add SDP content of the IMS signaling before forwarding the communication session request to the second wireless device 14.
**Action 702.** The second wireless device 14 may receive the communication session request and establish connectivity to the first wireless device 10, e.g. a normal voice call. But the second wireless device 14 may also be instructed to establish a data channel connection to the first network node 12, the communication may go through the second network node 13 even though the second network node 13 is not actively involved.
**Action 703.** The second wireless device 14 may send a response to the communication session request to the first wireless device 10.
**Action 704.** The first operator e.g. the first network node 12, may then push a selected set of additional service information of the first wireless device 10 to the second wireless device 14 over the established data channel in the form of e.g. java scripts. These java scripts may be executed by the calling application of the second wireless device 14 and show an additional set of services now available to the second wireless device 14. A selected set of the first wireless device's 10 additional services may thus then also be used and executed by the second wireless device 14.

In some embodiments the second wireless device 14 may, similar to the first wireless device 10, also establish a data channel connection with its local operator, e.g. the second network node 13 of the second wireless device 14, and the AS in that network may also in a similar fashion expose some of the second wireless device's 14 services to the first wireless device 10 over a data channel between the first wireless device 10 the second network node 13.

During session establishment between the first wireless device 10 and the second wireless device 14, the IMS data channel may also be established directly between the wireless devices, without intervening the operators. The additional services now exposed for the first wireless device 10 as well as for the second wireless device 14 may now be used for an enhanced communication experience between the first wireless device 10 and the second wireless device 14, even if the second wireless device 14 initially did not have any knowledge or subscription to the services available to the first wireless device 10. A service example as an enhanced communication session experience may be an Augmented Reality experience between the first wireless device 10 and the second wireless device 14, for e.g. remote support type of cases.

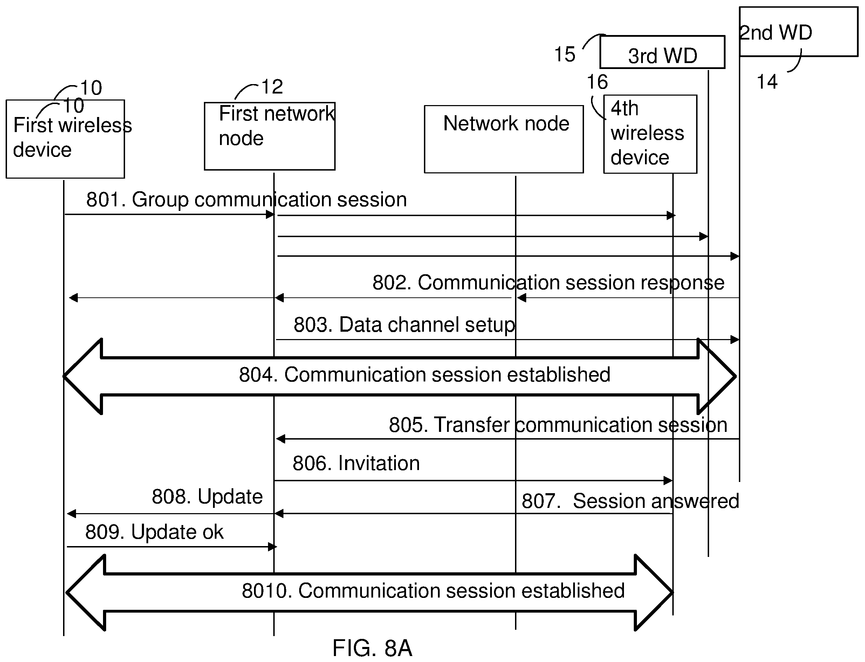

**Fig. 8A** illustrates a flowchart according to some embodiments herein showing the following actions:
Action 801. In a group services case, when a call, e.g. a communication session, is made towards the common group number, the call will end up in the Service AS hosted by a communication service provider (CSP) owning the service. The AS, e.g. the first network node 12 or connected to the first network node 12, may then fork or forward the call to all members of the group, e.g. the second wireless device (WD) 14, a third wireless device 15 and a fourth wireless device 16.
**Actions 802 and 803.** The group member who answers may not only have the voice connection established, the network node may also establish the data channel between the Service AS and the answering device, even if it belongs to a different CSP.
**Action 804.** The Service AS may then push service specific information, e.g. java script, which is executed at the group members and will allow the members of the group to execute group services. One such example may be the possibility to transfer the call to another group member by simply pressing a button.
**Actions 805-810.** The second wireless device 14 may then transfer the communication to the 4^{th} WD. This may be done in that the first network node 12 sends an invitation to the 4^{th} WD and the 4^{th} WD 16 sends a session answered to the first network node 12. *The first network node 12 sends an update to the first wireless device 10, which OKs the update. The communication session is then established.

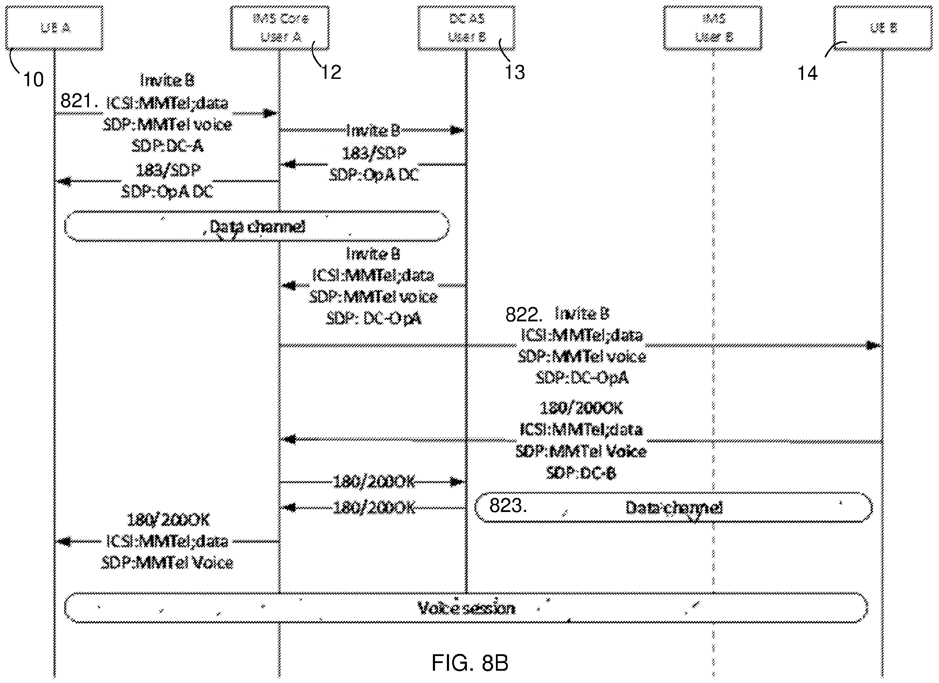

**Fig. 8B** illustrates a flowchart according to some embodiments herein showing the following actions for setting up the data channel as well as the communication session.

**Action 821.** The first wireless device 10, shown as UE A in Fig. 8B, may initiate a voice call towards the second wireless device 14, shown as UE B in Fig. 8B, or towards a specific network number, e.g. a Data Channel number, here denoted DC#. The UE A may send an invite comprising ICSI, and SDPs.

The first wireless device 10 may include a media feature tag, e.g. data to tell the network and the remote UE, i.e. the second wireless device 14, that the IMS data channel is supported. If the call is towards DC#, the first wireless device 10 need not be IMS data channel capable, i.e. the first wireless device 10 may not need to support the capability of establishing the data channel. For the case when the first wireless device 10 is IMS data channel capable, the first wireless device 10 may include the SDP for basic data channel establishment towards the first network node 12.

**Action 822.** A data channel offer, e.g. comprising the SDP, may also be initiated by the first network node 12 towards the second wireless device 14 if not initiated by the first wireless device 10.

**Action 823.** An IMS Data channel is established between the serving operator, e.g. the first operator, and the second wireless device 14. The first network node 12, shown as IMS Core User A in Fig. 8B, may push additional service data information to the second wireless device 14 over the opened data channel, e.g. page layout and java scripts.

The data media feature tag and SDP information for data channel establishment between the first network node 12 and the second wireless device 14 is forwarded to the second wireless device 14 to tell that the IMS data channel is supported by the first wireless device 10 and by the first network node 12. When the first wireless device 10 was calling the DC#, or based on some other conditions configured in the first network node 12, that information to attempt using the IMS data channel towards the second wireless device 14 need not necessarily be forwarded from the first wireless device but may also be originated by the first network node 12..

If the second wireless device 14 is IMS data channel capable:
- The second wireless device 14 may provide the same capability indication, e.g. media feature tag 'data' and SDP data channel information, in the response to the session request.
- The capability from the second wireless device 14 together with the SDP answer for Data Channel (DC) establishment may be captured by the DC AS at the first network node 12. A data channel connection may now be established between the second wireless device 14 and the first network node 12.
- The first network node 12 may push service information related to the first wireless device, e.g. page layout and java scripts, which may be executed at the second wireless device 12 and show additional services to be used as an enhancement to the voice session.

If both the first wireless device 10 and the second wireless device 14 are IMS data channel capable, the first wireless device 10 and the second wireless device 14 may initiate a service request to upgrade the voice session with any of the offered services.

Embodiments herein thus enable IMS users to upgrade the communication session, e.g. voice, to a collaboration session using an aggregated, e.g. accumulated, service list. An aggregated service list, when used herein, may mean a full, or partial, union of the services available to the first wireless device 10 and the second wireless device 14 that is larger than the service list available to the first wireless device 10 or the second wireless device 14 alone. E.g. if services A B C are available to the first wireless device 10 and services C D E are available to the second wireless device 14, the aggregated list could e.g. be A B C E. In this example, service D is still only available to the second wireless device 14 and not possible to use in the call between the first wireless device 10 and the second wireless device 14. This is a larger set of services than the intersection of the services, which would only be service C in this example.

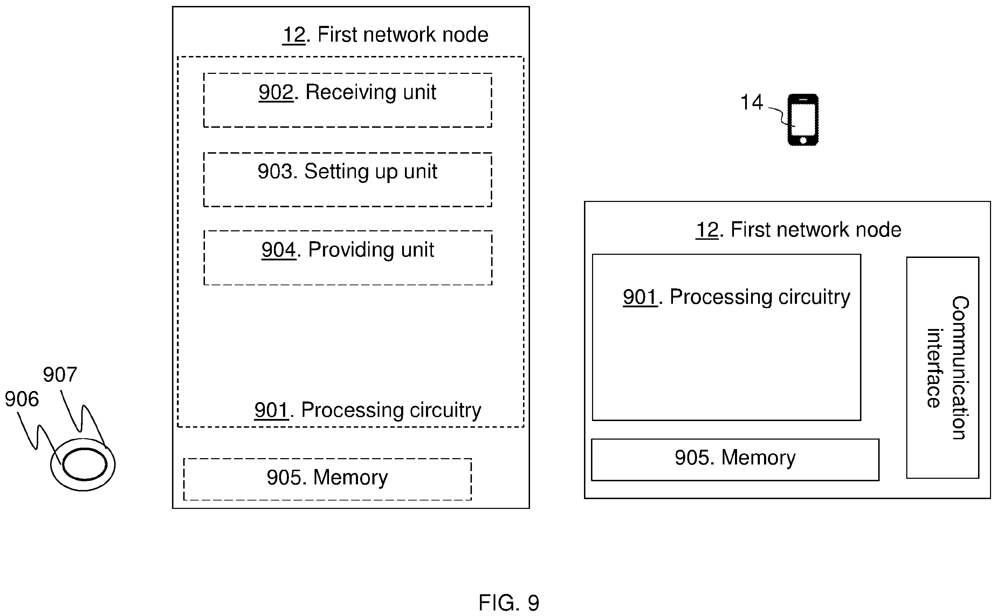

**Fig. 9** is a block diagram depicting the first network node 12 for handling the communication session, wherein the first network node 12 is associated with the first communication network 1 operated by the first operator according to embodiments herein.

The first network node 12 may comprise **processing circuitry 901,** e.g. one or more processors, configured to perform the methods herein.

The first network node 12 may comprise a **receiving unit 902.** The first network node 12, the processing circuitry 901, and/or the receiving unit 902 may be configured to receive the communication session request, towards the second wireless device 14, from the first wireless device 10 associated with the first communication network 1 operated by the first operator. The communication session request may comprise the SDP indicating data as media. The communication session request may comprise the application identifier. The communication session request may comprise the capability indicator.

The first network node 12 may comprise a **setting up unit 903.** The first network node 12, the processing circuitry 901, and/or the setting up unit 903 is configured to setup the data channel between the first network node 12 and the second wireless device 14, wherein the second wireless device 14 is associated with the second communication network 2 operated by the second operator. The data channel may be the IMS data channel.

The first network node 12 may comprise a **providing unit 904.** The first network node 12, the processing circuitry 901, and/or the providing unit 904 is configured to provide data over the setup data channel to the second wireless device 14, wherein the data is related to the service provided for the first wireless device 10 serviced by the first operator. The first network node 12, the processing circuitry 901, and/or the providing unit 904 may be configured to provide the data by pushing the data from to the second wireless device 14. The first network node 12, the processing circuitry 901, and/or the providing unit 904 may be configured to provide the data by the second wireless device 14 pulling data from the first network node 12. The first network node 12, the processing circuitry 901, and/or the providing unit 904 may be configured to provide the data by executing the service at the second wireless device wherein the service is for the first wireless device 10 serviced by the first operator.

The first network node 12 further comprises **a memory 905.** The memory 905 comprises one or more units to be used to store data on, such as radio signals, data such as SDP, media data, application identifiers, capability indicators, input/output data, metadata, etc. and applications to perform the methods disclosed herein when being executed, and similar. The first network node 12 may further comprise a communication interface comprising e.g. one or more antenna or antenna elements.

The methods according to the embodiments described herein for first network node 12 are respectively implemented by means of e.g. a **computer program product** 906 or a computer program, comprising instructions, i.e., software code portions, which, when executed on at least one processor, cause the at least one processor to carry out the actions described herein, as performed by the first network node 12. The computer program product 906 may be stored on **a computer-readable storage medium 907,** e.g. a disc, a universal serial bus (USB) stick or similar. The computer-readable storage medium 907, having stored thereon the computer program product, may comprise the instructions which, when executed on at least one processor, cause the at least one processor to carry out the actions described herein, as performed by the first network node12. In some embodiments, the computer-readable storage medium may be a transitory or a non-transitory computer-readable storage medium.

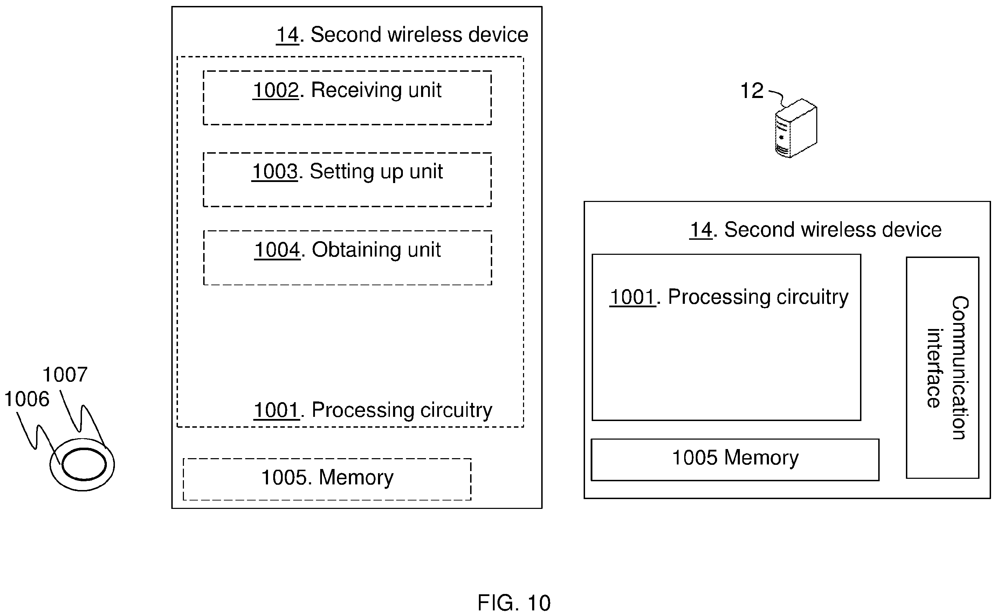

Fig. 10 is a block diagram depicting the second wireless device 14 for handling the communication session, wherein the second wireless device 14 is associated with the second communication network 2 operated by the second operator according to embodiments herein.

The second wireless device 14 may comprise **processing circuitry 1001,** e.g. one or more processors, configured to perform the methods herein.

The second wireless device 14 may comprise a **receiving unit 1002.** The second wireless device 14, the processing circuitry 1001, and/or the receiving unit 1002 may be configured to receive the communication session request that may comprise the SDP indicating data as media during set up. The communication session request may comprise the SDP. The communication session request may comprise the application identifier. The communication session request may comprise the capability indicator.

The second wireless device 14 may comprise a **setting up unit 1003.** The second wireless device 14, the processing circuitry 1001, and/or the setting up unit 1003 is configured to setup the data channel, initiated by the first network node 12, between the first network node 12 and the second wireless device 14, wherein the first network node 12 is associated with the first communication network 1 operated by the first operator. The data channel may be the IMS data channel.

The second wireless device may comprise an **obtaining unit 1004.** The second wireless device 14, the processing circuitry 1001, and/or the obtaining unit 1004 is configured to obtain data, over the setup data channel, wherein the data is related to the service provided for the first wireless device 10 serviced by the first operator. The second wireless device 14, the processing circuitry 1001, and/or the obtaining unit 1004 may be configured to obtain the data by receiving the data pushed from the first network node 12. The second wireless device 14, the processing circuitry 1001, and/or the obtaining unit 1004 may be configured to obtain the data by pulling the data from the first network node 12. The second wireless device 14, the processing circuitry 1001, and/or the obtaining unit 1004 may be configured to obtain the data by executing the service at the second wireless device wherein the service is for the first wireless device 10 serviced by the first operator.

The second wireless device 14 further comprises **a memory 1005.** The memory 1005 comprises one or more units to be used to store data on, such as radio signals, data such as SDP, media data, application identifiers, capability indicators, input/output data, metadata, etc. and applications to perform the methods disclosed herein when being executed, and similar. The second wireless device 14 may further comprise a communication interface comprising e.g. one or more antenna or antenna elements.

The methods according to the embodiments described herein for second wireless device 14 are respectively implemented by means of e.g. a **computer program product 1006** or a computer program, comprising instructions, i.e., software code portions, which, when executed on at least one processor, cause the at least one processor to carry out the actions described herein, as performed by second wireless device 14. The computer program product 1006 may be stored on **a computer-readable storage medium 1007,** e.g. a disc, a universal serial bus (USB) stick or similar. The computer-readable storage medium 1007, having stored thereon the computer program product, may comprise the instructions which, when executed on at least one processor, cause the at least one processor to carry out the actions described herein, as performed by second wireless device 14. In some embodiments, the computer-readable storage medium may be a transitory or a non-transitory computer-readable storage medium.

In some embodiments a more general term "radio network node" is used and it can correspond to any type of radio-network node or any network node, which communicates with a wireless device and/or with another network node. Examples of network nodes are gNodeB, eNodeB, NodeB, MeNB, SeNB, a network node belonging to Master cell group (MCG) or Secondary cell group (SCG), base station (BS), multistandard radio (MSR) radio node such as MSR BS, eNodeB, network controller, radio-network controller (RNC), base station controller (BSC), relay, donor node controlling relay, base transceiver station (BTS), access point (AP), transmission points, transmission nodes, Remote radio Unit (RRU), Remote Radio Head (RRH), nodes in distributed antenna system (DAS), etc.

In some embodiments the non-limiting term wireless device or user equipment (UE) is used and it refers to any type of wireless device communicating with a network node and/or with another wireless device in a cellular or mobile communication system. Examples of UE are target device, device to device (D2D) UE, proximity capable UE (aka ProSe UE), machine type UE or UE capable of machine to machine (M2M) communication, Tablet, mobile terminals, smart phone, laptop embedded equipped (LEE), laptop mounted equipment (LME), USB dongles etc.

Embodiments are applicable to any radio access technology (RAT) or multi-RAT systems, where the devices receives and/or transmit signals, e.g. data, such as New Radio (NR), Wi-Fi, Long Term Evolution (LTE), LTE-Advanced, Wideband Code Division Multiple Access (WCDMA), Global System for Mobile communications/enhanced Data rate for GSM Evolution (GSM/EDGE), Worldwide Interoperability for Microwave Access (WiMax), or Ultra Mobile Broadband (UMB), just to mention a few possible implementations.

As will be readily understood by those familiar with communications design, that functions means or circuits may be implemented using digital logic and/or one or more microcontrollers, microprocessors, or other digital hardware. In some embodiments, several or all of the various functions may be implemented together, such as in a single application-specific integrated circuit (ASIC), or in two or more separate devices with appropriate hardware and/or software interfaces between them. Several of the functions may be implemented on a processor shared with other functional components of a wireless device or network node, for example.

Alternatively, several of the functional elements of the processing units discussed may be provided through the use of dedicated hardware, while others are provided with hardware for executing software, in association with the appropriate software or firmware. Thus, the term "processor" or "controller" as used herein does not exclusively refer to hardware capable of executing software and may implicitly include, without limitation, digital signal processor (DSP) hardware and/or program or application data. Other hardware, conventional and/or custom, may also be included. Designers of communications devices will appreciate the cost, performance, and maintenance trade-offs inherent in these design choices.

It will be appreciated that the foregoing description and the accompanying drawings represent non-limiting examples of the methods and apparatus taught herein. As such, the apparatus and techniques taught herein are not limited by the foregoing description and accompanying drawings. Instead, the embodiments herein are limited only by the following claims.

## Claims

1. A method performed by a system comprising a first network node (12), a first wireless device (10) and a second wireless device (14), wherein the first network node (12) is associated with a first communication network (1) operated by a first operator and the second wireless device (14) is associated with a second communication network (2) operated by a second operator, wherein the method comprising
- setting up, by the first network node (12), a data channel between the first network node (12) and the second wireless device (14);
- providing, by the first network node (12), additional service information over the setup data channel to the second wireless device (14), wherein the additional service information is related to an additional service provided for the first wireless device (10) serviced by the first operator, wherein the additional service information is provided by pushing the additional service information to the first wireless device (10),
- showing, at the second wireless device (14), the additional service to be used at the second wireless device by executing the additional service information;
- selecting the shown additional service, at the second wireless device (14), to receive data related to the additional service, wherein the additional service is for the first wireless device (10) serviced by the first operator that the first wireless device (10) has subscribed to, but which additional service the second wireless device (14) has not subscribed to with the second operator.

2. A system comprising a first network node (12), a first wireless device (10) and a second wireless device (14), wherein the first network node (12) is associated with a first communication network (1) operated by a first operator and the second wireless device (14) is associated with a second communication network (2) operated by a second operator, the first network node (12) is configured to:
setup a data channel between the first network node (12) and the second wireless device (14);
provide additional service information over the setup data channel to the second wireless device (14), wherein the additional service information is related to an additional service provided for the first wireless device (10) serviced by the first operator,
wherein the first network node (12) is configured to provide the additional service information by pushing the additional service information related to the first wireless device (10);
and wherein the second wireless device is configured to:
execute the additional service information to show the additional service to be used at the second wireless device,
and wherein the second wireless device is further configured to
select the shown additional service to receive data related to the additional service, wherein the additional service is for the first wireless device (10) serviced by the first operator that the first wireless device (10) has subscribed to but which additional service the second wireless device (14) has not subscribed to with the second operator.

3. A method performed by a second wireless device (14) for handling a communication session, wherein the second wireless device (14) is comprised in a system comprising a first network node (12), a first wireless device (10) and the second wireless device (14), wherein the first wireless device (10) and the first network node (12) is associated with a first communication network (1) operated by a first operator and the second wireless device (14) is associated with a second communication network (2) operated by a second operator, the method comprising:
- setting up (502) a data channel, initiated by the first network node (12), between the first network node (12) and the second wireless device (14);
- receiving from the first network node (12), pushed additional service information of an additional service related to the first wireless device (10), wherein the additional service is for the first wireless device (10) serviced by the first operator that the first wireless device (10) has subscribed to but which additional service the second wireless device (14) has not subscribed to with the second operator;
- executing the received additional service information to show the additional service to be used at the second wireless device; and
- selecting the shown additional service to receive data related to the additional service.

4. A second wireless device (14) for handling a communication session, wherein the second wireless device (14) is configured to be comprised in a system comprising a first network node (12), a first wireless device (10) and the second wireless device (14), wherein the first wireless device (10) and the first network node (12) is associated with a first communication network (1) operated by a first operator and the second wireless device (14) is associated with a second communication network (2) operated by a second operator, wherein the second wireless device is configured to:
set up a data channel, initiated by the first network node (12), between the first network node (12) and the second wireless device (14);
receive from the first network node (12), pushed additional service information of an additional service related to the first wireless device (10), wherein the additional service is for the first wireless device (10) serviced by the first operator that the first wireless device (10) has subscribed to but which additional service the second wireless device (14) has not subscribed to with the second operator;
execute the received additional service information to show the additional service to be used at the second wireless device; and
select the shown additional service to receive data related to the additional service..

## Patentansprüche

1. Verfahren, das von einem System umfassend einen ersten Netzwerkknoten (12), eine erste drahtlose Vorrichtung (10) und eine zweite drahtlose Vorrichtung (14) durchgeführt wird, wobei der erste Netzwerkknoten (12) einem ersten Kommunikationsnetzwerk (1) zugeordnet ist, das von einem ersten Betreiber betrieben wird, und die zweite drahtlose Vorrichtung (14) einem zweiten Kommunikationsnetzwerk (2) zugeordnet ist, das von einem zweiten Betreiber betrieben wird, wobei das Verfahren Folgendes umfasst:
- Einrichten eines Datenkanals zwischen dem ersten Netzwerkknoten (12) und der zweiten drahtlosen Vorrichtung (14) durch den ersten Netzwerkknoten (12);
- Bereitstellen von Zusatzdienstinformationen durch den ersten Netzwerkknoten (12) über den Einrichtungs-Datenkanal an die zweite drahtlose Vorrichtung (14), wobei sich die Zusatzdienstinformationen auf einen Zusatzdienst beziehen, der für die erste drahtlose Vorrichtung (10) bereitgestellt wird, das vom ersten Betreiber bedient wird, wobei die Zusatzdienstinformationen durch Übermitteln der Zusatzdienstinformationen an die erste drahtlose Vorrichtung (10) bereitgestellt werden,
- Anzeigen, auf der zweiten drahtlosen Vorrichtung (14), des Zusatzdienstes, der auf der zweiten drahtlosen Vorrichtung durch Ausführen der Zusatzdienstinformationen verwendet werden soll;
- Auswählen des angezeigten Zusatzdienstes auf der zweiten drahtlosen Vorrichtung (14), um Daten zu empfangen, die sich auf den Zusatzdienst beziehen, wobei der Zusatzdienst für die erste drahtlose Vorrichtung (10) bestimmt ist, die vom ersten Betreiber bedient wird, den die erste drahtlose Vorrichtung (10) abonniert hat, wobei die zweite drahtlose Vorrichtung (14) diesen Zusatzdienst jedoch nicht beim zweiten Betreiber abonniert hat.

2. System, umfassend einen ersten Netzwerkknoten (12), eine erste drahtlose Vorrichtung (10) und eine zweite drahtlose Vorrichtung (14), wobei der erste Netzwerkknoten (12) einem ersten Kommunikationsnetzwerk (1) zugeordnet ist, das von einem ersten Betreiber betrieben wird, und die zweite drahtlose Vorrichtung (14) einem zweiten Kommunikationsnetzwerk (2) zugeordnet ist, das von einem zweiten Betreiber bedient wird, wobei der erste Netzwerkknoten (12) konfiguriert ist zum:
Einrichten eines Datenkanals zwischen dem ersten Netzwerkknoten (12) und der zweiten drahtlosen Vorrichtung (14);
Bereitstellen, über den Einrichtungs-Datenkanal, von Zusatzdienstinformationen an die zweite drahtlose Vorrichtung (14), wobei sich die Zusatzdienstinformationen auf einen Zusatzdienst beziehen, der für die erste drahtlose Vorrichtung (10) bereitgestellt wird, die vom ersten Betreiber bedient wird,
wobei der erste Netzwerkknoten (12) so konfiguriert ist, dass er die Zusatzdienstinformationen bereitstellt, indem er die Zusatzdienstinformationen, die sich auf die erste drahtlose Vorrichtung (10) beziehen, übermittelt;
und wobei die zweite drahtlose Vorrichtung konfiguriert ist zum:
Ausführen der Zusatzdienstinformationen, um den Zusatzdienst anzuzeigen, der auf der zweiten drahtlosen Vorrichtung verwendet werden soll,
und wobei die zweite drahtlose Vorrichtung weiter konfiguriert ist zum
Auswählen des angezeigten Zusatzdienstes, um Daten zu empfangen, die sich auf den Zusatzdienst beziehen, wobei der Zusatzdienst für die erste drahtlose Vorrichtung (10) bestimmt ist, die vom ersten Betreiber bedient wird und den die erste drahtlose Vorrichtung (10) abonniert hat, den die zweite drahtlose Vorrichtung (14) jedoch nicht beim zweiten Betreiber abonniert hat.

3. Verfahren, ausgeführt durch eine zweite drahtlose Vorrichtung (14) zur Abwicklung einer Kommunikationssitzung, wobei die zweite drahtlose Vorrichtung (14) in einem System umfasst ist, das einen ersten Netzwerkknoten (12), eine erste drahtlose Vorrichtung (10) und die zweite drahtlose Vorrichtung (14) umfasst, wobei die erste drahtlose Vorrichtung (10) und der erste Netzwerkknoten (12) einem ersten Kommunikationsnetzwerk (1) zugeordnet sind, das von einem ersten Betreiber betrieben wird, und die zweite drahtlose Vorrichtung (14) einem zweiten Kommunikationsnetzwerk (2) zugeordnet ist, das von einem zweiten Betreiber betrieben wird, wobei das Verfahren Folgendes umfasst:
- Einrichten (502) eines vom ersten Netzwerkknoten (12) initiierten Datenkanals zwischen dem ersten Netzwerkknoten (12) und der zweiten drahtlosen Vorrichtung (14);
- Empfangen, vom ersten Netzwerkknoten (12), von übermittelten Zusatzdienstinformationen eines Zusatzdienstes, der sich auf die erste drahtlose Vorrichtung (10) bezieht, wobei der Zusatzdienst für die erste drahtlose Vorrichtung (10) bestimmt ist, die von dem ersten Betreiber bedient wird, den die erste drahtlose Vorrichtung (10) abonniert hat, den die zweite drahtlose Vorrichtung (14) jedoch nicht beim zweiten Betreiber abonniert hat;
- Ausführen der empfangenen Zusatzdienstinformationen, um den Zusatzdienst anzuzeigen, der auf der zweiten drahtlosen Vorrichtung verwendet werden soll; und
- Auswählen des angezeigten Zusatzdienstes, um Daten zu erhalten, die sich auf den Zusatzdienst beziehen.

4. Zweite drahtlose Vorrichtung (14) zur Abwicklung einer Kommunikationssitzung, wobei die zweite drahtlose Vorrichtung (14) so konfiguriert ist, dass sie in einem System umfasst ist, das einen ersten Netzwerkknoten (12), eine erste drahtlose Vorrichtung (10) und die zweite drahtlose Vorrichtung (14) umfasst, wobei die erste drahtlose Vorrichtung (10) und der erste Netzwerkknoten (12) einem ersten Kommunikationsnetzwerk (1) zugeordnet sind, das von einem ersten Betreiber betrieben wird, und die zweite drahtlose Vorrichtung (14) einem zweiten Kommunikationsnetzwerk (2) zugeordnet ist, das von einem zweiten Betreiber betrieben wird, wobei die zweite drahtlose Vorrichtung konfiguriert ist zum:
Einrichten eines vom ersten Netzwerkknoten (12) initiierten Datenkanal zwischen dem ersten Netzwerkknoten (12) und der zweiten drahtlosen Vorrichtung (14);
Empfangen, vom ersten Netzwerkknoten (12), von übermittelten Zusatzdienstinformationen eines Zusatzdienstes, der sich auf die erste drahtlose Vorrichtung (10) bezieht, wobei der Zusatzdienst für die erste drahtlose Vorrichtung (10) bestimmt ist, die vom ersten Betreiber bedient wird, den die erste drahtlose Vorrichtung (10) abonniert hat, wobei die zweite drahtlose Vorrichtung (14) diesen Zusatzdienst jedoch nicht beim zweiten Betreiber abonniert hat.
Ausführen der empfangenen Zusatzdienstinformationen, um den auf der zweiten drahtlosen Vorrichtung zu verwendenden Zusatzdienst anzuzeigen; und
Auswählen des angezeigten Zusatzdienstes, um Daten zu empfangen, die sich auf diesen Zusatzdienst beziehen.

## Revendications

1. Procédé réalisé par un système comprenant un premier nœud de réseau (12), un premier dispositif sans fil (10) et un second dispositif sans fil (14), dans lequel le premier nœud de réseau (12) est associé à un premier réseau de communication (1) exploité par un premier opérateur et le second dispositif sans fil (14) est associé à un second réseau de communication (2) exploité par un second opérateur, dans lequel le procédé comprend
- l'établissement, par le premier nœud de réseau (12), d'un canal de données entre le premier nœud de réseau (12) et le second dispositif sans fil (14) ;
- la fourniture, par le premier nœud de réseau (12), d'informations de service supplémentaires sur le canal de données établi au second dispositif sans fil (14), dans lequel les informations de service supplémentaires sont relatives à un service supplémentaire fourni au premier dispositif sans fil (10) desservi par le premier opérateur, dans lequel les informations de service supplémentaires sont fournies en poussant les informations de service supplémentaires vers le premier dispositif sans fil (10),
- l'indication, au niveau du second dispositif sans fil (14), du service supplémentaire à utiliser au niveau du second dispositif sans fil en exécutant les informations de service supplémentaires ;
- la sélection du service supplémentaire indiqué, au niveau du second dispositif sans fil (14), pour recevoir des données relatives au service supplémentaire, dans lequel le service supplémentaire est destiné au premier dispositif sans fil (10) desservi par le premier opérateur auquel le premier dispositif sans fil (10) a souscrit, mais auquel le second dispositif sans fil (14) n'a pas souscrit auprès du second opérateur.

2. Système comprenant un premier nœud de réseau (12), un premier dispositif sans fil (10) et un second dispositif sans fil (14), dans lequel le premier nœud de réseau (12) est associé à un premier réseau de communication (1) exploité par un premier opérateur et le second dispositif sans fil (14) est associé à un second réseau de communication (2) exploité par un second opérateur, le premier nœud de réseau (12) est configuré pour :
établir un canal de données entre le premier nœud de réseau (12) et le second dispositif sans fil (14) ;
fournir des informations de service supplémentaires sur le canal de données établi au second dispositif sans fil (14), dans lequel les informations de service supplémentaires sont relatives à un service supplémentaire fourni pour le premier dispositif sans fil (10) desservi par le premier opérateur,
dans lequel le premier nœud de réseau (12) est configuré pour fournir les informations de service supplémentaires en poussant les informations de service supplémentaires relatives vers le premier dispositif sans fil (10) ;
et dans lequel le second dispositif sans fil est configuré pour :
exécuter les informations de service supplémentaires pour indiquer le service supplémentaire à utiliser au niveau du second dispositif sans fil,
et dans lequel le second dispositif sans fil est en outre configuré pour
sélectionner le service supplémentaire indiqué pour recevoir des données relatives au service supplémentaire, dans lequel le service supplémentaire est destiné au premier dispositif sans fil (10) desservi par le premier opérateur auquel le premier dispositif sans fil (10) a souscrit, mais auquel le second dispositif sans fil (14) n'a pas souscrit auprès du second opérateur.

3. Procédé réalisé par un second dispositif sans fil (14) pour gérer une session de communication, dans lequel le second dispositif sans fil (14) est compris dans un système comprenant un premier nœud de réseau (12), un premier dispositif sans fil (10) et le second dispositif sans fil (14), dans lequel le premier dispositif sans fil (10) et le premier nœud de réseau (12) sont associés à un premier réseau de communication (1) exploité par un premier opérateur et le second dispositif sans fil (14) est associé à un second réseau de communication (2) exploité par un second opérateur, le procédé comprenant :
- l'établissement (502) d'un canal de données, initié par le premier nœud de réseau (12), entre le premier nœud de réseau (12) et le second dispositif sans fil (14) ;
- la réception, à partir du premier nœud de réseau (12), d'informations de service supplémentaires poussées d'un service supplémentaire relatif au premier dispositif sans fil (10), dans lequel le service supplémentaire est destiné au premier dispositif sans fil (10) desservi par le premier opérateur auquel le premier dispositif sans fil (10) a souscrit mais auquel le second dispositif sans fil (14) n'a pas souscrit auprès du second opérateur ;
- l'exécution des informations de service supplémentaires reçues pour indiquer le service supplémentaire à utiliser au niveau du second dispositif sans fil ; et
- la sélection du service supplémentaire indiqué pour recevoir des données relatives au service supplémentaire.

4. Second dispositif sans fil (14) destiné à gérer une session de communication, dans lequel le second dispositif sans fil (14) est configuré pour être compris dans un système comprenant un premier nœud de réseau (12), un premier dispositif sans fil (10) et le second dispositif sans fil (14), dans lequel le premier dispositif sans fil (10) et le premier nœud de réseau (12) sont associés à un premier réseau de communication (1) exploité par un premier opérateur et le second dispositif sans fil (14) est associé à un second réseau de communication (2) exploité par un second opérateur, dans lequel le second dispositif sans fil est configuré pour :
établir un canal de données, initié par le premier nœud de réseau (12), entre le premier nœud de réseau (12) et le second dispositif sans fil (14) ;
recevoir, à partir du premier nœud de réseau (12), des informations de service supplémentaires poussées d'un service supplémentaire relatif au premier dispositif sans fil (10), dans lequel le service supplémentaire est destiné au premier dispositif sans fil (10) desservi par le premier opérateur auquel le premier dispositif sans fil (10) a souscrit mais auquel le second dispositif sans fil (14) n'a pas souscrit auprès du second opérateur ;
exécuter les informations de service supplémentaires reçues pour indiquer le service supplémentaire à utiliser au niveau du second dispositif sans fil ; et
sélectionner le service supplémentaire indiqué pour recevoir des données relatives au service supplémentaire.
